# EUROPÄISCHE PATENTSCHRIFT

(11) **EP 0 937 234 B1**
(45) Veröffentlichungstag und Bekanntmachung des Hinweises auf die Patenterteilung: **05.12.2001**
(21) Anmeldenummer: 97940095.9
(22) Anmeldetag: 20.08.1997
(51) Int. Cl.: G01G 19/44, G01G 23/00

(54) **Personenwaage mit Trittgenerator**
Bathroom scale with foot operated generator
Pèse personne avec generateur à pied

(30) Priorität: 05.11.1996 DE 19645534
(43) Veröffentlichungstag der Anmeldung: 25.08.1999
(73) Patentinhaber: Soehnle AG, 9462 Montlingen (CH)
(72) Erfinder: SOEHNLE, Armin, D-71540 Murrhardt (DE)
(86) Internationale Anmeldenummer: EP9704523
(87) Internationale Veröffentlichungsnummer: WO9820310

(56) Entgegenhaltungen:
- WO-A-86/07504
- DE-A- 4 401 923
- DE-A- 4 432 858
- GB-A- 2 065 983
- GB-A- 2 088 651

## Beschreibung

Die Erfindung betrifft eine Personenwaage mit einem Messwertaufnehmer, der beim Auftreten der sich wiegenden Person ein Messsignal erzeugt, das an eine Auswerteschaltung gelangt, die aus dem Messsignal das Gewicht ermittelt und an einer Anzeigeeinrichtung zur Anzeige bringt, und bei der die Versorgung der Auswerteschaltung und der Anzeigeeinrichtung mit elektrischer Energie durch einen Generator erfolgt, der in einer Platte angebracht ist, auf die das Gewicht der sich wiegenden Person einwirkt, wobei der Generator durch ein Betätigungselement mechanisch betätigbar ist, das durch eine bei der Betätigung zusammengedrückte Rückholfeder danach wieder in seine Ausgangslage gebracht wird.

Eine derartige Personenwaage ist aus der DE 44 32 858 A1 bekannt. Dabei ist über der genannten Platte noch eine weitere Platte, die eigentliche Trittplatte, angeordnet, an der das Betätigungselement (dort als Nocke bezeichnet) fest angeordnet ist. Beim Betreten der Tretplatte trifft die Nocke auf einen horizontal verschiebbares weiteres Betätigungselement des Generators, der damit in Bewegung versetzt wird und elektrische Energie erzeugt. Die Rückholfeder ist zwischen der erstgenannten Platte und der Trittplatte angeordnet.

Nachteilig an dieser Anordnung ist die ungleichmäßige Krafteinleitung von der Trittplatte in das horizontal verschiebbare Betätigungselement des Generators, die sehr stark davon abhängt, wie und an welcher Stelle man die Trittplatte belastet.

Aufgabe der Erfindung ist es, eine Waage der eingangs genannten Art so weiter zu entwickeln, dass der Aufbau und die Betätigung einfacher wird.

Erfindungsgemäß wird diese Aufgabe durch die im Kennzeichen des Patentanspruches 1 angegebenen Merkmale gelöst. Die Erfindung betrifft ferner verschiedene vorteilhafte Weiterbildungen.

Der Aufbau ist somit wesentlich einfacher, insbesondere dadurch, dass die Kraftübertragung von dem Stößel auf den Generator durch eine Zahnstange/Ritzel-Anordnung erfolgt und das Wirksamwerden der Rückholfeder an der Zahnstange sehr viel unkomplizierter und weniger störanfällig ist. In den beiden Fällen, nämlich bei direkter Betätigung des Stößels 18 mit dem Fuß vor dem Wägen oder bei Betätigung des Stößels durch eine darüber angeordnete Trittplatte wird in einfacher Weise eine sichere und zuverlässige Betätigung erreicht,

Ausführungsbeispiele der Erfindung und ihrer vorteilhaften Weiterbildungen werden im Folgenden unter Bezugnahme auf die beigefügten Zeichnungen näher beschrieben. Es stellen dar:
- Figur 1: ein erstes Ausführungsbeispiel;
- Figur 2: eine Draufsicht auf eine Personenwaage nach Figur 1;
- Figur 3: schematisch ein zweites Ausführungsbeispiel.

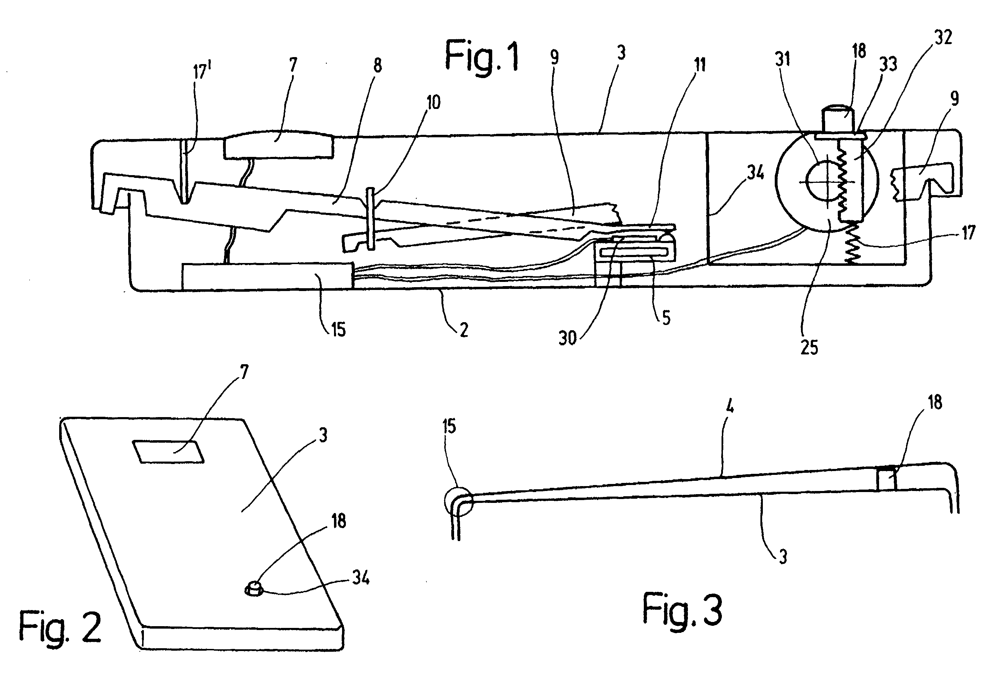

Die Waage nach Figur 1 weist ein Bodenteil auf, das durch eine Bodenplatte 2 mit einem umlaufend senkrecht stehenden Rand 2' gebildet wird. Oberhalb dieses Bodenteils befindet sich eine bewegliche Platte 3, die über Stützen 17' auf Wiegehebel 8, 9 einwirkt. Dabei sind zwei Wiegehebel 8 und zwei Wiegehebel 9 vorgesehen, von denen jeweils nur einer aus Figur 1 ersichtlich ist. Die beiden Wiegehebel 8 sind beide mit der Druckplatte 1 verbunden, die auf einen Messwertaufnehmer 5 (Wägezelle) einwirkt. In dieser Wägezelle wird, z.B. mit Hilfe eines Dehnmessstreifens 30, ein Messsignal abgleitet, das an eine Auswerteschaltung 15 gelangt, welche daraus das Gewicht der sich wiegenden Person ermittelt und an einer Anzeigeeinrichtung 7 zur Anzeige bringt. Die Anzeigeeinrichtung 7 ist in der Platte 3, von oben einsehbar, angeordnet. Soweit bis jetzt beschrieben, ist die mechanische Anordnung dieser Personenwaage in der eingangs erwähnten Druckschrift DE 44 32 858 A1 beschrieben, so dass im vorliegenden Zusammenhang eine detailliertere Beschreibung entbehrlich ist.

Die elektrische Versorgung der Auswerteschaltung 15 und der Anzeigeeinrichtung 7 erfolgt durch einen Generator 25. Es kann sich dabei um einen einfachen Dynamo, wie er z.B. auch in Fahrrädern oder in handbetätigten Taschenlampen Verwendung findet, handeln. Die Welle des Dynamos ist mit einem Ritzel (Zahnrad) 31 versehen, das sich im Eingriff mit einer Zahnstange 32 befindet, die vertikal auf und ab verschiebbar in entsprechenden Führungen (nicht gezeigt) geführt ist. Die Zahnstange 32 ist fest mit dem Stößel 18 verbunden, der durch eine Öffnung 33 in der Platte 3 von oben her zugänglich ist und über die Öffnung hinaus ein gewisses Stück vorsteht, so dass man mit dem Fuß vor oder nach dem Auftreten auf die Waage 3, die dann als eigentliche Wiegeplatte dient, den Stößel 18 betätigen und damit für die Auswertevorrichtung 15 und die Anzeigeeinrichtung 7 den erforderlichen Strom erzeugen kann.

Der Generator 25 ist von unten an die Platte 3 angeflanscht und mit einer becherförmigen Abdeckung 34 versehen, in der auch die Führungen für die Bewegung der Zahnstange 32 vorgesehen ist. Auf diese Weise ist gewährleistet, dass durch die Belastung des Stößels 18 kein Kraftnebenschluss auf den Messwertaufnehmer 5 erfolgt.

Figur 3 zeigt schematisch ein zweites Ausführungsbeispiel. Es ist im Prinzip ebenso aufgebaut, wie das nach Figur 1. Lediglich zusätzliche befindet sich über der Platte 3 eine Trittplatte 4, die beim Betreten auf den Stößel 18 einwirkt. Wenn dieser betätigt ist, dann sitzt die Trittplatte 4 direkt auf der Platte 3 auf, so dass das Gewicht der auf der Platte 4 stehenden Person direkt auf die Platte 3 einwirkt und von dieser dann am Messwertaufnehmer 5 wirksam wird. Dabei ist das (in Figur 3) linke Ende der Trittplatte 4 dermaßen über das linke Ende der Platte 3 gebogen bzw. aufgesetzt, dass ein Gelenk 15 entsteht, um das rechte Ende der Trittplatte 4, das auf den Stößel 18 einwirkt, schwenkbar ist.

## Patentansprüche

1. Personenwaage mit einem Messwertaufnehmer (5), der beim Auftreten der sich wiegenden Person ein Messsignal erzeugt, das an eine Auswerteschaltung (15) gelangt, die daraus das Gewicht ermittelt und an einer Anzeigeeinrichtung (7) zur Anzeige bringt, und bei der die Versorgung der Auswerteschaltung (15) und der Anzeigeeinrichtung (7) mit elektrischer Energie durch einen Generator (25) erfolgt, der in einer Platte (20) angebracht ist, auf die das Gewicht der sich wiegenden Person einwirkt, wobei der Generator (25) durch ein Betätigungselement mechanisch betätigbar ist, das durch eine bei seiner Betätigung zusammendrückbare Rückholfeder (17) danach wieder in seine Ausgangslage gebracht wird, **dadurch gekennzeichnet, dass** das Betätigungselement als Stößel (18) ausgebildet ist, über eine Zahnstange (32) und ein Ritzel (31) den Generator (25) antreibt und über die Platte (3) derart hervorsteht, dass es unabhängig von derselben (3) betätigbar ist, wobei die dem Stößel (18) als Betätigungsorgan für den Generator (23) zugeordnete Rückholfeder (17) zwischen einer becherförmigen Abdeckung (34), die von unten an die Platte (3) angeflanscht ist einerseits und Zahnstange (32) oder dem Ritzel (31) andererseits wirksam wird.

2. Personenwaage nach Anspruch 1, **dadurch gekennzeichnet, dass** die genannte Platte (3) die Platte zum Auftreten der sich wiegenden Person ist.

3. Personenwaage nach Anspruch 1, **dadurch gekennzeichnet, dass** über der genannten Platte (3) eine Trittplatte (4) zum Auftreten der sich wiegenden Person angeordnet ist, die auf den Stößel (18) einwirkt.

4. Personenwaage nach Anspruch 3, **dadurch gekennzeichnet, dass** die Trittplatte (4) auf einer Seite der Waage an die erstgenannte Platte (3) schwenkbar angelenkt ist und an der anderen Seite der Waage auf den Stößel (18) einwirkt.

## Claims

1. Weighing scales, with a measurement transducer (5) which, when a person weighing himself steps on, generates a measurement signal arriving at an evaluation circuit (15) which determines the weight and displays it on an indicator device (7), and in which the evaluation circuit (15) and the indicator device (7) are supplied with electrical energy by a generator (25) mounted in a plate (20) on which the weight of the person weighing himself acts, the generator (25) being capable of being actuated mechanically by an actuating element which, by a return spring (17) capable of being compressed during the actuation of said actuating element, is thereafter brought into its initial position again, **characterized in that** the actuating element is designed as a tappet (18), drives the generator (25) via a rack (32) and a pinion (31) and projects above the plate (3) in such a way that it can be actuated independently over the latter (3), the return spring (17) assigned to the tappet (18) as an actuating member for the generator (25) taking effect between a bowl-shaped cover (34), flanged from below to the plate (3), on the one hand, and the rack (32) or the pinion (31), on the other hand.

2. Weighing scales according to Claim 1, **characterized in that** the said plate (3) is the plate that is to be stepped on by the person weighing himself.

3. Weighing scales according to Claim 1, **characterized in that** a tread plate (4) can be stepped on by the person weighing himself is arranged above the said plate (3) and acts on the tappet (18).

4. Weighing scales according to Claim 3, **characterized in that** the tread plate (4) is articulated pivotably on the first-mentioned plate (3) on one side of the weighing scales and acts on the tappet (18) on the other side of the weighing scales.

## Revendications

1. Pèse-personnes comportant un capteur de mesure (5) qui, lorsqu'une personne monte pour se peser, génère un signal de mesure qui parvient à un circuit d'évaluation (15) qui détermine le poids depuis ce signal et le fait afficher sur un dispositif d'affichage (7), et dans lequel l'alimentation en énergie électrique du circuit d'évaluation (15) et du dispositif d'affichage (7) s'effectue au moyen d'un générateur (25) agencé dans un plateau (20) sur lequel agit le poids d'une personne qui se pèse, le générateur (25) pouvant être actionné mécaniquement par un élément d'actionnement qui est ramené ensuite dans sa position initiale par un ressort de rappel (17) compressible lors d'un actionnement dudit élément, **caractérisé en ce que** l'élément d'actionnement est réalisé sous forme d'un poussoir (18), entraîne le générateur via une crémaillère (32) et via un pignon (31) et fait saillie au-delà du plateau (3) de telle sorte qu'il peut être actionné indépendamment de ce plateau (3), le ressort de rappel (17) associé au poussoir (18) à titre d'organe d'actionnement pour le générateur (25) agissant entre un recouvrement en forme de godet (34) bridé depuis le bas sur le plateau (3) d'une part et une crémaillère (32) ou le pignon (31) d'autre part.

2. Pèse-personnes selon la revendication 1, **caractérisé en ce que** ledit plateau (3) est le plateau où monte la personne pour se peser.

3. Pèse-personnes selon la revendication 1, **caractérisé en ce qu'**au-dessus dudit plateau (3) est agencé un plateau d'accès (4) où monte une personne pour se peser, qui agit sur le poussoir (18).

4. Pèse-personnes selon la revendication 1, **caractérisé en ce que** le plateau d'accès (4) est articulé en basculement sur le plateau (3) mentionné en premier lieu sur un côté du pèse-personnes, et agit sur le poussoir (18) sur l'autre côté du pèse-personnes.
